# EUROPÄISCHE PATENTSCHRIFT

(11) **EP 0 928 384 B1**
(45) Veröffentlichungstag und Bekanntmachung des Hinweises auf die Patenterteilung: **12.04.2000**
(21) Anmeldenummer: 97937443.6
(22) Anmeldetag: 09.08.1997
(51) Int. Cl.: F16H 63/42, B60K 41/22

(54) **AUTOMATISCH GESTEUERTE KUPPLUNG MIT EINEM MANUELL SCHALTBAREN GETRIEBE**
AUTOMATIC CLUTCH WITH MANUALLY SHIFTED GEARBOX
SYSTEME D'EMBRAYAGE AUTOMATIQUE ET BOITE DE VITESSE MANUELLE

(30) Priorität: 25.09.1996 DE 19639200
(43) Veröffentlichungstag der Anmeldung: 14.07.1999
(73) Patentinhaber: DaimlerChrysler AG, 70567 Stuttgart (DE)
(72) Erfinder: KOSIK, Franz, D-73760 Ostfildern (DE); GRASS, Thomas, D-73660 Urbach (DE)
(74) Vertreter: Patentanwalts-Partnerschaft Rotermund + Pfusch
(86) Internationale Anmeldenummer: DE9701701
(87) Internationale Veröffentlichungsnummer: WO9813628

(56) Entgegenhaltungen:
- EP-A- 0 404 354
- US-A- 5 377 797

## Beschreibung

Die Erfindung betrifft eine automatisch gesteuerte Kupplung im Antriebstrang eines Kraftfahrzeuges mit einem manuell bzw. willkürlich zwischen Gängen bzw. Fahrstufen mit unterschiedlichen Getriebeübersetzungen schaltbaren Getriebe, welches bei einem Gang- bzw. Fahrstufenwechsel eine Neutral- bzw. Leerlaufstellung durchläuft, mit einem durch eine Sensorik gesteuerten, die Kupplung betätigenden motorischen Stellaggregat, welches die Kupplung öffnet, wenn die Sensorik, die die Stellung eines Schalthebels des Getriebes bzw. die jeweilige Fahrstufe oder den jeweiligen Gang des Getriebes registriert, erkennt, daß die jeweils zuvor eingelegte Fahrstufe bzw. der zuvor eingelegte Gang verlassen werden.

Fahrzeuge mit üblichen Verbrennungsmotoren benötigen einen Antriebstrang mit Getriebe, um das Übersetzungsverhältnis zwischen der Motordrehzahl und der Drehzahl der Antriebsräder des Fahrzeuges unterschiedlichen Verhältnissen anpassen zu können. Bei üblichen manuell geschalteten Getrieben durchlaufen das Schaltorgan bzw. der Schalthebel beim Wechsel der Gänge bzw. Fahrstufen jeweils einen Neutral- bzw. Leerlaufbereich.

Während des Wechsels der Gänge bzw. Fahrstufen muß bei üblichen Getrieben die Kupplung geöffnet sein.

Neben fahrerseitig durch Pedal od.dgl. betätigten Kupplungen sind auch automatisch betätigte Kupplungen grundsätzlich bekannt und serienmäßig im Einsatz.

Die US 5 377 797 zeigt beispielhaft eine Kupplung der eingangs angegebenen Art, wobei die Kupplung geschlossen bzw. geöffnet wird, wenn der Schalthebel des Getriebes hinreichend weit einer einer Fahrstufe zugeordneten Lage angenähert bzw. aus dieser Lage wegbewegt wird.

Im übrigen wird bei automatischen Kupplungen eine Sensorik angestrebt, die verschiedenartige Parameter erfaßt. Insbesondere kann die Sensorik registrieren, welche Fahrstufe bzw. welcher Gang eingelegt sind. Dies ist deshalb wichtig und vorteilhaft, weil die Kupplung bei einer Schaltabsicht des Fahrers, d.h. dann, wenn ein zuvor eingelegter Gang bzw. eine zuvor eingelegte Fahrstufe verlassen werden, möglichst schnell geöffnet werden soll, um größeren Verschleiß an der Kupplung und/oder Schäden am Getriebe zu vermeiden.

Es wurde schon versucht, mit den von der Sensorik erfaßten Signalen für den jeweils eingelegten Gang bzw. die jeweils eingelegte Fahrstufe auch eine Gang- bzw. Fahrstufenanzeige zu steuern.

Die DE-U 89 13 910 bezieht sich auf eine Fahrstufenanzeige.

Aufgabe der Erfindung ist es nun, vorteilhafte Anordnungen für automatisch gesteuerte Kupplungen aufzuzeigen.

Diese Aufgabe wird erfindungsgemäß dadurch gelöst, daß eine Anzeige für den jeweils eingelegten Gang bzw. die jeweils eingelegte Getriebestufe sowie die Neutral- bzw. Leerlaufstellung vorhanden und die Anzeige für die Neutral- bzw. Leerlaufstellung bei einem Wechsel der Gänge bzw. Fahrstufen unterdrückbar ist.

Die Erfindung beruht auf dem allgemeinen Gedanken, den Durchlauf der Neutral- bzw. Leerlaufstellung nicht anzuzeigen, solange aufgrund der von der Sensorik erfaßten Parameter die Absicht des Fahrers, einen Wechsel der Gänge bzw. Fahrstufen durchzuführen, erkennbar oder sehr wahrscheinlich ist. Damit wird der Vorteil geboten, daß der Fahrer beim Wechseln der Gänge bzw. Fahrstufen nicht durch Anzeigesignale irritiert werden kann, die lediglich einem vorübergehend zwangsweise durchlaufenen Zustand des Getriebes zugeordnet sind, der für die Schaltabsicht des Fahrers ohne Bedeutung ist und vom Fahrer nicht als Endzustand angestrebt wird.

Gemäß einer bevorzugten Ausführungsform der Erfindung kann vorgesehen sein, die Anzeige des Neutral- bzw. Leerlaufzustandes erst nach einer Verzögerungszeit, deren Länge entsprechend der typischen Zeitspanne eines Gang- bzw. Fahrstufenwechsels bemessen ist, zu ermöglichen. Auf diese Weise läßt sich in konstruktiv einfacher Weise - beispielsweise durch eine Verzögerungsschaltung - ermöglichen, daß während eines üblichen Gang- bzw. Fahrstufenwechsels der dabei zwangsläufig durchlaufene Neutral- bzw. Leerlaufzustand nicht angezeigt wird. Andererseits bleibt eine Anzeige dieses Zustandes immer dann möglich, wenn der Fahrer den Leerlauf-bzw. Neutralzustand tatächlich einschaltet.

Gemäß einer weiteren besonders bevorzugten Ausführungsform kann vorgesehen sein, die Bewegungsgeschwindigkeit zu erfassen, mit der der Fahrer beim Gang- bzw. Fahrstufenwechsel das entsprechende Steuerorgan, in der Regel ein Schalthebel, betätigt.

Die Erfassung dieses Parameters ist in vorteilhafter Weise für die Kupplungssteuerung vorgesehen. Denn die genannte Bewegungsgeschwindigkeit ist ein Hinweis darauf, ob der Fahrer eine mehr sportliche oder mehr auf Komfort ausgerichtete Fahrweise bevorzugt, denn sportliche Fahrer werden in der Regel den Gang- bzw. Fahrstufenwechsel sehr zügig durchführen, während dieser Wechsel vergleichsweise langsam erfolgt, wenn ein möglichst hoher Fahrkomfort angestrebt wird. Damit kann bei Erfassung der Geschwindigkeit des Gang- bzw. Fahrstufenwechsels auch die Steuerung der Kupplung dem jeweiligen Fahrstil angepaßt werden, indem beispielsweise bei sportlicher Fahrweise die Schlupfphase beim Schließen der Kupplung verkürzt bzw. bei komfortbewußter Fahrweise verlängert wird.

Das Signal für die Bewegungsgeschwindigkeit des Steuerorgans bzw. Schalthebels des Getriebes kann nun erfindungsgemäß auch bei der Unterdrückung bzw. Durchführung der Anzeige des Leerlauf- bzw. Neutralzustandes verwertet werden. Wird der Leerlauf- bzw. Neutralzustand mit einer gewissen Mindestgeschwindigkeit durchlaufen, stellt dies ein sicheres Anzeichen für die Absicht des Fahrer dar, die Gänge bzw. Fahrstufen zu wechseln. In diesem Falle unterbleibt die Anzeige des Neutral- bzw. Leerlaufzustandes. Bei verschwindender Geschwindigkeit der Bewegung des Steuerorgans bzw. Schalthebels des Getriebes im Bereich der Leerlauf- bzw. Neutralstellung muß dagegen mit der Absicht des Fahrers gerechnet werden, den Neutral- bzw. Leerlaufzustand tatsächlich einzuschalten. In diesem Falle wird dieser Zustand unverzüglich angezeigt.

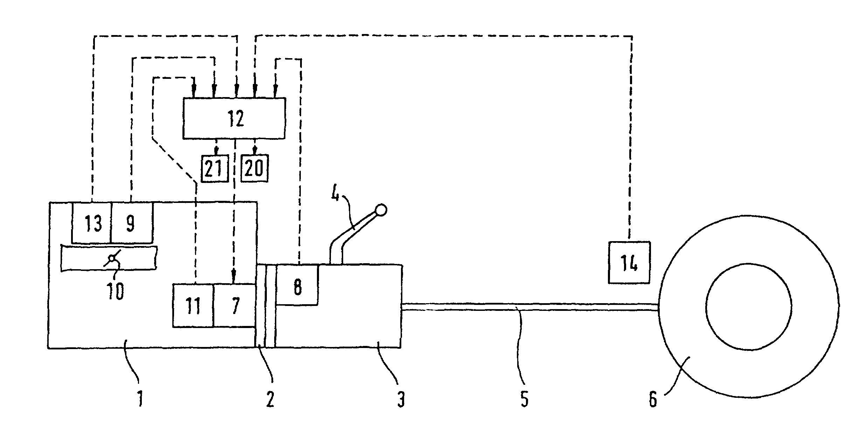

Im übrigen wird hinsichtlich bevorzugter Merkmale der Erfindung auf die Ansprüche sowie die nachfolgende Erläuterung der Zeichnung verwiesen, anhand der besonders vorteilhafte Ausführungsformen beschrieben werden.

Dabei zeigt die einzige Figur eine schematisierte Darstellung eines Antriebstranges eines Kraftfahrzeuges sowie der für die Kupplungssteuerung wesentlichen Komponenten.

Gemäß der Zeichnung ist ein Verbrennungsmotor 1 über eine automatisch betätigte Kupplung 2 und ein Getriebe 3, dessen Fahrstufen bzw. Gänge durch manuelle Betätigung eines Schalthebels 4 gewechselt werden, und eine Antriebswelle 5, z.B. eine Kardanwelle, mit Antriebsrädern 6 eines im übrigen nicht näher dargestellten Kraftfahrzeuges antriebsmäßig verbunden.

Die Betätigung der Kupplung 2 erfolgt automatisch mittels eines motorischen Stellaggregates 7, zu desen Steuerung eine Sensorik zur Überwachung verschiedener Parameter des Fahrbetriebes vorgesehen ist.

Diese Sensorik umfaßt eine Sensoranordnung 8, welche dem Getriebe 3 bzw. dem Schalthebel 4 zugeordnet ist und dessen Stellungen sowie Bewegungen erfaßt und damit die jeweils eingelegte Fahrstufe bzw. den jeweils eingelegten Gang und die Bewegungsgeschwindigkeit des Schalthebels 4 kennt.

Durch einen Sensor 9 wird die Stellung eines zur Leistungssteuerung des Motors 1 dienenden Organs registriert, beispielsweise einer Drosselklappe 10 eines Luftansaugsystems des Motors 1.

Des weiteren umfaßt die Sensorik einen Weggeber 11, welcher dem Stellaggregat 7 zugeordnet ist und dessen Stellung und damit einen Parameter erfaßt, welcher zur Größe des von der automatischen Kupplung 2 übertragbaren Momentes analog ist.

Die Steuerschaltung 12 kommuniziert außerdem mit einer Motorsteuerung 13, welche unter anderem die Aufgabe hat, die Motordrehzahl weitestgehend unabhängig von der Belastung des Motors auf einer Mindestdrehzahl, etwa der Leerlaufdrehzahl zu halten. Diese Motorsteuerung 13 kann Signale erzeugen, die die jeweilige Drehzahl der Motors 1 und/oder das jeweils vom Motor 1 erzeugte Drehmoment wiedergeben.

Im übrigen kommuniziert die Steuerschaltung 12 mit Drehzahlgebern 14, welche den Antriebsrädern 6 zugeordnet sind.

Aufgrund des Informationsaustausches mit der Motorsteuerung 13 kann die Steuerschaltung 12 das jeweils von der Kupplung 2 tatsächlich übertragene Drehmoment ermitteln. Gleichzeitig kennt die Steuerschaltung 12 die Stellung des Stellaggregates 7. Darüber hinaus kann die Steuerschaltung 12 aufgrund der Signale der Motorsteuerung 13, welche auch die Drehzahl des Motors wiedergibt, und der Signale der Drehzahlgeber 14 in Verbindung mit den Signalen der Sensoranordnung 8 für den eingelegten Gang bzw. die eingesetzte Fahrstufe (diese Signale zeigen die Getriebeübersetzung) feststellen, ob die Kupplung 2 mit Schlupf arbeitet, d.h. ob die Drehzahlen der Eingangsseite und der Ausgangsseite der Kupplung voneinander abweichen. Sollte dies der Fall sein, wird die jeweilige Stellung des Stellaggregates 7 dem jeweils von der Kupplung 2 übertragenen Drehmoment zugeordnet. Wenn nämlich die Kupplung 2 mit Schlupf arbeitet, entspricht das jeweils tatsächlich von der Kupplung übertragene Moment dem bei der zugeordneten Stellung des Stellaggregates 7 übertragbaren Moment. Auf diese Weise kann die Steuerschaltung 12 ständig einander zugeordnete Werte zwischen dem Stellhub des Stellaggregates 7 und dem von der Kupplung 2 übertragbaren Moment ermitteln und speichern und daraus das bei anderen Stellungen des Stellaggregates 7 übertragbare Moment der Kupplung 2 extrapolieren.

Damit besteht die Möglichkeit, beim Schließen der Kupplung 2, etwa nach einem Wechsel der Gänge bzw. Fahrstufen des Getriebes 3 die zunächst auftretende Schlupfphase der Kupplung 2 feinfühlig in Abhängigkeit von vorgegebenen Parametern zu steuern.

Im vorliegenden Falle wird von der Sensoranordnung 8 auch die Geschwindigkeit erfaßt, mit der der Schalthebel 4 bei einem Wechsel der Gänge bzw. Fahrstufen bewegt wird. Im Falle einer hohen Bewegungsgeschwindigkeit, wie sie für eine "sportliche" Fahrweise typisch ist, kann dann die Schlupfphase der Kupplung 2 nach einem Gang- bzw. Fahrstufenwechsel verkürzt werden.

Das Schaltschema des Schalthebels 4 ist in grundsätzlich herkömmlicher Weise ausgelegt, d.h. beim Gang- bzw. Fahrstufenwechsel durchläuft der Schalthebel 4 jeweils eine Neutral-bzw. Leerlaufstellung, wobei das Getriebe 3 in seinem Leerlauf- bzw. Neutralzustand keine Antriebsverbindung zwischen Motor 1 und Antriebsrädern 6 zuläßt.

Erfindungsgemäß werden nun die Signale der Sensoranordnung 8 auch zur Steuerung einer Anzeige 20 herangezogen, die die jeweils eingelegte Fahrstufe bzw. den jeweils eingelegten Gang und auch die Leerlauf- bzw. Neutralstellung des Schalthebels 4 anzuzeigen vermag.

Bei einem normalen Gang- bzw. Fahrstufenwechsel unterbleibt erfindungsgemäß - zumindest im Regelfall - eine Anzeige der Neutral- bzw. Leerlaufstellung. Dazu wird gemäß einer bevorzugten Ausführungsform der Erfindung die von der Sensoranordnung 8 erfaßte Bewegungsgeschwindigkeit des Schalthebels 4 im Bereich der Neutral- bzw. Leerlaufstellung ausgewertet. Solange die Bewegungsgeschwindigkeit oberhalb eines geringen Schwellwertes liegt, unterbleibt eine Anzeige der Neutral-bzw. Leerlaufstellung, weil mit höchster Wahrscheinlichkeit davon ausgegangen werden kann, daß der Fahrer tatsächlich einen Gang- bzw. Fahrstufenwechsel durchführen will. Nur bei Unterschreitung des genannten Schwellwertes kann eine Anzeige der Neutral- bzw. Leerlaufstellung erfolgen.

Zusätzlich oder alternativ kann vorgesehen kann, eine Anzeige der Neutral- bzw. Leerlaufstellung erst nach einer gewissen Verzögerungszeit nach dem Zeitpunkt zu ermöglichen, zu dem der Schalthebel 4 eine einer Fahrstufe bzw. einem Gang zugeordnete Stellung verläßt. Wenn die Verzögerungszeit in erfindungsgemäßer Weise einer typischen Zeitspanne für einen Gang-bzw. Fahrstufenwechsel angepaßt ist, wird ebenfalls eine Anzeige der Neutral- bzw. Leerlaufstellung des Schalthebels 4 bei einem Gang- oder Fahrstufenwechsel vermieden.

Bei der Erfindung ist vorteilhaft, daß bei der Steuerung der Anzeige 20 lediglich solche Signale benötigt werden, die für die Steuerung der Kupplung 2 ohnehin registriert werden.

Gegebenenfalls können die Signale der Motorsteuerung 13 zur Steuerung einer weiteren Anzeige 21 herangezogen werden, welche dem Fahrer die für die jeweilige Belastung des Motors 1 optimale Fahrstufe bzw. den optimalen Gang des Getriebes 3 anzeigt.

## Patentansprüche

1. Automatisch gesteuerte Kupplung (2) im Antriebstrang (1,2,3,5,6) eines Kraftfahrzeuges mit einem manuell bzw. willkürlich zwischen Gängen bzw. Fahrstufen mit unterschiedlichen Getriebeübersetzungen schaltbaren Getriebe (3), welches bei einem Gang- bzw. Fahrstufenwechsel eine Neutral-bzw. Leerlaufstellung durchläuft, mit einem durch eine Sensorik (8,9,11,12,13,14) gesteuerten, die Kupplung betätigenden motorischen Stellaggregat (7), welches die Kupplung öffnet, wenn die Sensorik, die die Stellung eines Schalthebels (4) des Getriebes bzw. die jeweilige Fahrstufe oder den jeweiligen Gang des Getriebes registriert, erkennt, daß die jeweils zuvor eingelegte Fahrstufe bzw. der jeweils zuvor eingelegte Gang verlassen werden,
**dadurch gekennzeichnet,**
daß eine Anzeige (20) für den jeweils eingelegten Gang bzw. die jeweils eingelegte Fahrstufe sowie die Neutral- bzw. Leerlaufstellung vorhanden und die Anzeige (20) für die Neutral- bzw. Leerlaufstellung bei einem Wechsel der Gänge bzw. Fahrstufen unterdrückbar ist.

2. Kupplung mit Getriebe nach Anspruch 1,
**dadurch gekennzeichnet,**
daß die Anzeige (20) für die Neutral- bzw. Leerlaufstellung erst nach vorgebbarer Verzögerungszeit nach Verlassen einer Fahrstufe bzw. Ganges erregbar ist.

3. Kupplung mit Getriebe nach Anspruch 1 oder 2,
**dadurch gekennzeichnet,**
daß eine Sensoranordnung (8) zur Erfassung einer Stellgeschwindigkeit eines Steuerorgans bzw. Schalthebels (4) für einen Gang- bzw. Fahrstufenwechsel vorhanden und die Anzeige (20) für die Neutral- bzw. Leerlaufstellung nur dann erregbar ist, wenn die Stellgeschwindigkeit einen geringen Schwellwert unterschreitet.

4. Kupplung mit Getriebe nach einem der Ansprüche 1 bis 3,
**dadurch gekennzeichnet,**
daß eine weitere Anzeige (21) vorhanden ist, die abhängig von von der Motorsteuerung (13) an sie abgegebenen Signalen eine Schaltempfehlung anzeigt.

## Claims

1. An automatic clutch in the drive train (1,2,3,5,6) of a motor vehicle, having a transmission (3) which can be manually or arbitrarily shifted between gears or drive positions with different transmission ratios and passes through a neutral or idling position during a gear change or change of drive position, having a motorized adjusting unit (7), which is controlled by a system of sensors (8,9,11,12,13,14), actuates the clutch and releases the clutch when the system of sensors, which detects the position of a gear lever (4) of the transmission or the respective drive position or the respective gear of the transmission, detects that the respectively previously selected drive position or the repectively previously selected gear is being left, wherein an indication (20) for the respectively selected gear or the respectively selected transmission stage as well as the neutral or idling position is provided and it is possible to suppress the indication (20) for the neutral or idling position during a change of gears or drive positions.

2. The clutch as claimed in claim 1, wherein the indication (20) for the neutral or idling position can be activated only after a predeterminable delay time after leaving a drive position or gear.

3. The clutch as claimed in claim 1 or 2, wherein a sensor arrangement (8) for sensing an adjusting speed of a control element or shift lever (4) for a gear change or change of drive position is provided and the indication (20) for the neutral or idling position can be activated only if the adjusting speed falls below a low threshold value.

4. The clutch as claimed in one of claims 1 to 3, wherein a further indication (21) is provided, which indicates a shift recommendation on the basis of signals emitted to it by the engine control (13).

## Revendications

1. Embrayage à commande automatique (2) dans la ligne de transmission (1, 2, 3, 5, 6) d'un véhicule à moteur comportant une boîte de vitesses (3) que l'on peut faire passer manuellement ou volontairement entre des vitesses présentant différents rapports de boîte et qui, lors d'un changement de vitesse, passe par une position neutre ou position de marche à vide, ainsi qu'un groupe réglant motorisé (7) qui est commandé par un circuit de détection (8, 9, 11, 12, 13, 14), qui manoeuvre l'embrayage et ouvre l'embrayage lorsque le circuit de détection, qui enregistre la position d'un levier (4) de boîte de vitesses ou la vitesse dans laquelle la boîte de vitesses est respectivement engagée, reconnaît que l'on a quitté la vitesse respectivement engagée précédemment,
caractérisé par le fait
qu'il existe une signalisation (20) pour la vitesse respectivement engagée dans la boîte de vitesses ainsi que pour la position neutre ou position de marche à vide et que la signalisation (20) pour la position neutre ou position de marche à vide peut être supprimée lors d'un changement de vitesse.

2. Embrayage avec boîte de vitesses selon la revendication 1,
caractérisé par le fait
que la signalisation (20) pour la position neutre ou position de marche à vide ne peut être excitée qu'après un délai, à prescrire, après que l'on a quitté une vitesse de la boîte de vitesses.

3. Embrayage avec boîte de vitesses selon la revendication 1 ou 2,
caractérisé par le fait
qu'il existe un dispositif de détection (8) pour saisir une vitesse de déplacement d'un organe de commande ou d'un levier (4) de boîte de vitesses pour un changement de vitesse de la boîte de vitesses et que la signalisation (20) pour la position neutre ou position de marche à vide ne peut être excitée que si la vitesse de déplacement dépasse, par valeur inférieure, une faible valeur de seuil.

4. Embrayage avec boîte de vitesses selon l'une des revendications 1 à 3,
caractérisé par le fait
qu'il existe une autre signalisation (21) qui, en fonction de signaux qui lui sont envoyés par le circuit de commande (13) du moteur, donne une recommandation de changer de vitesse.
